# FASCICULE DE BREVET EUROPEEN

(11) **EP 3 456 031 B1**
(45) Date de publication et mention de la délivrance du brevet: **01.04.2026**
(21) Numéro de dépôt: 17726665.7
(22) Date de dépôt: 04.05.2017
(51) Int. Cl.: H04L 67/1021, H04L 67/52

(54) **PROCÉDÉ D'ACCÈS À UN CONTENU HÉBERGÉ SUR UN SERVEUR SELECTIONNÉ EN FONCTION DE LA LOCALISATION DU TERMINAL UTILISATEUR**
VERFAHREN ZUR BEARBEITUNG VON INHALT AUF EINEN SERVER, AUSGEWÄHLT DURCH DIE STANDORT DES BENUTZERKLEMMES
METHOD FOR ACCESSING CONTENT HOSTED ON A SERVER SELECTED IN ACCORDANCE WITH THE LOCATION OF THE USER TERMINAL

(30) Priorité: 10.05.2016 FR 1654177
(43) Date de publication de la demande: 20.03.2019
(73) Titulaire: Orange, 92130 Issy-les-Moulineaux (FR)
(72) Inventeur: FROGER, Ivan, 22300 LANNION (FR)
(86) Numéro de dépôt international: PCT/FR2017/051082
(87) Numéro de publication internationale: WO 2017/194861

(56) Documents cités:
- EP-A1- 3 089 422
- CN-A- 105 493 462
- US-A1- 2012 184 258
- US-A1- 2014 355 542
- US-A1- 2015 006 615
- US-A1- 2015 006 615
- US-A1- 2015 154 640
- US-A1- 2015 154 640
- US-A1- 2015 281 385

## Description

### 1. Domaine de l'invention

L'invention se situe dans le domaine des réseaux de communications et concerne plus particulièrement une technique d'accès à un contenu hébergé sur un serveur qui est sélectionné en fonction de la localisation du terminal utilisateur.

### 2. Etat de la technique antérieure

Une évolution des réseaux de télécommunications consiste à faire en sorte que les serveurs de contenus soient aussi proches que possible des terminaux voulant accéder à ces serveurs. Ceci s'explique pour différentes raisons :
- D'une part les contenus, de plus en plus composés de vidéo, requièrent de plus en plus de bande passante et donc de capacité de transmission;
- D'autre part, notamment pour ce qui concerne les infrastructures mobiles, les opérateurs cherchent à réduire autant que possible la latence des réseaux et un des moyens d'action pour réduire cette latence est de rapprocher les serveurs de contenus des terminaux utilisateurs;
- Enfin, et sans que les raisons évoquées pour expliquer cette évolution consistant à rapprocher les serveurs de contenus des utilisateurs soient exhaustives, la bande passante utilisée pour véhiculer les flux représentent un coût d'investissement et de gestion.

Ces raisons expliquent notamment le développement d'infrastructure et de serveurs de cache dans les réseaux, que l'on appelle CONs (en anglais Content Delivery Networks). L'accès à des contenus via par exemple le protocole HTTP (en anglais HyperText Transfer Protocol) est le plus souvent mis en œuvre via des serveurs CDNs gérés par l'opérateur du réseau de communication ou par une entité externe. Rapprocher des terminaux l'infrastructure de serveurs CDNs est un premier élément de réponse mais il reste à sélectionner le serveur CDN le mieux positionné par rapport au terminal utilisateur lorsque plusieurs serveurs CDN hébergent ou sont susceptibles d'héberger le même contenu.

Dans le même temps les réseaux de communications eux-mêmes évoluent avec l'introduction de fonctions virtualisées et les architectures de type MEC (en anglais Mobile Edge Computing) ou basées sur le Fog computing (technique qui consiste à héberger les applications en périphérie de réseau, donc au plus près des utilisateurs), ces deux types d'architecture ayant en commun de distribuer au plus près des utilisateurs les applications logicielles dont l'utilisateur fait usage et les contenus. Cela concerne à priori une variété de fonctions telles que celles liées à la mise en cache, à la sécurité ou à la mobilité. En rapprochant les fonctions et contenus des terminaux utilisateurs, ces types d'architecture se différencient des architectures dites « cloud », caractérisées par des fonctions et services centralisés, généralement distants des terminaux utilisateurs. Ces nouvelles architectures (MEC, FOG...) se positionnent en rupture notamment avec les architectures des réseaux mobiles aujourd'hui déployées. Ces architectures de réseaux mobiles se caractérisent par des serveurs de contenus positionnés au-delà - c'est-à-dire en amont pour le sens descendant vers l'utilisateur - des passerelles GGSN (en anglais Gateway GPRS Support Node) ou PDN-GW (en anglais Packet Data Network Gateway) qui sont le point d'entrée du réseau mobile et qui sont donc déployées entre les réseaux de paquets où se trouvent les serveurs et les réseaux d'accès mobiles. Ces passerelles sont elles-mêmes plutôt centralisées, et les serveurs de contenus sont donc assez éloignés des utilisateurs. Des options d'évolution de ces architectures mobiles, notamment dans le cadre des réseaux de quatrième puis de cinquième génération, reposent sur une distribution plus large des passerelles mobiles et donc des fonctions supportées par ces passerelles.

En outre, il est à noter que les architectures fixes et les architectures mobiles sont assez spécifiques et aujourd'hui peu convergentes s'agissant des fonctions et des services liées à l'adressage, au nommage, aux serveurs de contenus. Ainsi, un serveur CDN est le plus souvent spécifique aux accès fixes ou aux accès mobiles mais il est très peu fréquent qu'un même serveur CDN puisse être joint par un utilisateur mobile et un utilisateur fixe proches géographiquement. Or les opérateurs, dans un but de convergence des offres, sont de plus enclins à faire en sorte que tout type de contenu soit accessible depuis n'importe quel type de terminal connecté à tout type d'accès et aussi à rationaliser leurs architectures en déployant des fonctions et services communs pour les différents types d'accès.

Dans les techniques actuelles, la sélection d'un serveur de contenus, par exemple un serveur HTTP d'une architecture CDN, parmi un ensemble de serveurs déployés à différents endroits du réseau pour rapprocher le contenu des utilisateurs, est réalisée par l'intermédiaire de serveur DNS (en anglais Domain Name Server) et/ou de redirection d'une requête HTTP. Ainsi, il est possible de sélectionner le serveur en fonction de l'architecture DNS. Plus précisément, le terminal voulant accéder à un contenu effectue une requête DNS pour ce contenu et s'adresse à son résolveur DNS primaire, celui-ci ayant pour rôle de contacter ensuite le serveur DNS d'autorité ayant l'information concernant la localisation du contenu recherché, directement ou bien par l'intermédiaire d'autres serveurs DNS. L'objectif étant de donner au terminal l'adresse du serveur de contenu le plus proche du terminal, les techniques aujourd'hui utilisées pour satisfaire ce besoin reposent sur la prise en compte de l'adresse du serveur DNS primaire sollicité par le terminal pour accéder à un contenu. Cette information est dans certains cas insuffisante ou bien pas assez précise notamment si le serveur DNS primaire est centralisé ou bien si le terminal utilise un réseau privé virtuel pour accéder aux contenus, auquel cas son serveur DNS primaire est situé sur un site trop distant par rapport à ce qui est souhaitable. Dans ces cas l'adresse du serveur DNS primaire donne une information inexacte ou insuffisante sur la localisation du terminal utilisateur.

Une possibilité pour résoudre ce problème est de densifier l'architecture DNS et de distribuer plus largement les serveurs DNS primaires pour que l'information sur le serveur DNS primaire soit corrélée à une meilleure localisation du terminal, ce qui d'un point de vue architectural et pour des questions de coût et d'administration des réseaux, s'avère une option peu pertinente.

Une autre alternative, proposée dans les techniques actuelles, consiste à utiliser la redirection HTTP et à faire en sorte que le serveur de contenu sélectionné soit associé à l'adresse IP attribuée au terminal une fois que la requête HTTP parvient à un serveur centralisé. Ce serveur centralisé a pour rôle, à partir de l'adresse IP du terminal sollicitant le contenu, de transmettre un message « HTTP redirection ,, vers le terminal pour qu'il accède au contenu souhaité en contactant le serveur local, proche du terminal, qui lui a été indiqué par le serveur centralisé dans le message de redirection HTTP. Cette méthode ne convient cependant pas aux réseaux mobiles où l'adresse IP allouée au terminal n'a pas de signification en terme de localisation géographique, ni aux réseaux privés ou l'adresse allouée au terminal est généralement issue d'un « pool , d'adresses centralisé et n'a donc pas de signification en terme de localisation, ce qui induit que le serveur de contenu indiqué ne sera pas forcément proche géographiquement du terminal.

Une autre option consiste à inclure l'information de sous-réseau contenue dans l'adresse IP attribuée au client dans les requêtes ONS, conformément à ce qui est spécifié dans le document draft-ietf-dnsop-edns-client-subnet-06 (15 décembre 2015). Ainsi, l'information de sous-réseau contenue dans l'adresse IP du terminal peut être utilisée pour sélectionner le serveur de contenus. Cette option ne répond pas au15 problème de sélection de serveur de contenus car dans les réseaux mobiles ou dans les réseaux privés virtuels, cette information de sous-réseau ne suffit pas pour identifier un serveur de contenu proche du terminal.

Le document US 2015/0006615 A1 décrit un procédé et un dispositif permettant à un terminal de transmettre une requête d'obtention d'un contenu à un serveur vers lequel il a été redirigé par un sélecteur de CDN à partir d'un attribut de localisation. Le terminal a précédemment obtenu l'attribut de localisation d'un serveur de localisation (alinéa 12). Le document US 2015/0154640 A1 décrit un procédé et un système permettant de déterminer une localisation d'un serveur assurant la fourniture d'information publicitaire (advertisement) en fonction de la localisation géographique d'un terminal utilisateur (alinéa 14), le terminal transmettant une information de localisation dans une requête d'accès à l'information.

Le document CN 105 493 462 A décrit un procédé de livraison de contenus où un terminal sollicite un serveur de contenus sélectionné en fonction d'information de localisation permettant ainsi de réduire un délai de transmission et d'améliorer l'expérience utilisateur (D3, paragraphe [4]).

Le document US 2015/281385 A1 décrit un procédé de livraison de contenus où un serveur de livraison de contenus maintient une association entre des URLs et des informations de localisation. Ce serveur, à partir d'une information de localisation reçue d'un terminal, identifie une URL associée à cette information de localisation et la transmet au terminal.

Le document US 2014/355542 A1 décrit un procédé permettant à un UE (User Equipment) de transmettre une requête de service, d'obtenir une information de mobilité associée à l'UE, et de sélectionner un nœud de service parmi une pluralité de nœuds de service, et de transmettre une réponse à l'UE indiquant le nœud de service sélectionné à contacter pour fournir le service requis (D5, abstract).

Le document US 2012/0184258 A1 décrit une méthode et un équipement pour identifier un type de terminal mobile par des informations contrôlées à partir de moyens multiples, tels qu'un contrôle passif de protocoles de contrôle et un contrôle de protocoles de plan usager. Ces informations sont utilisées pour contrôler les opérations de mise en mémoire de données, sélectionner le contenu à délivrer et sélectionner des interfaces/réseaux alternatifs s'ils sont disponibles (D6, abstract).

La présente invention a pour objet de remédier à ces inconvénients.

### 3. Exposé de l'invention

L'invention vient améliorer la situation avec un procédé selon la revendication 1, un serveur de sélection selon la revendication 5, et un programme d'ordinateur selon la revendication 9. Des modes de réalisation supplémentaires sont définis dans les revendications dépendantes.

Selon les techniques antérieures, la sélection d'un serveur de contenus au plus proche de l'utilisateur est le plus souvent réalisée à partir d'informations basées sur l'adressage IP. L'adresse IP du client du terminal du client ou du résolveur DNS est le plus souvent prise en compte pour la sélection d'un serveur de contenus géographiquement proche du terminal. Or l'adresse IP, utilisée aussi bien pour identifier que pour localiser un terminal, ne remplit pas toujours réellement le rôle de localisateur notamment lorsque les adresses IP ne sont pas allouées suivant une organisation géographique comme c'est le cas pour la plupart des opérateurs mobiles, voire quand les terminaux des clients sont connectés via des proxys ou bien des tunnels. Grâce à l'invention, sachant que des informations de localisation sont transmises aux terminaux par des réseaux d'accès, par exemple de type cellulaire ou de type Wi-Fi, l'objectif consiste à se baser sur cette information pour sélectionner le serveur de contenus le plus adapté. Le serveur de contenus sélectionné doit être proche d'un point de vue géographique mais aussi d'un point de vue topologique pour minimiser les coûts d'accès, limiter les temps de latence et améliorer la qualité d'expérience pour l'utilisateur. Il est envisageable que le terminal reçoive plusieurs informations de localisation envoyées par des équipements de plusieurs réseaux d'accès auxquels le terminal est connecté. Afin de pouvoir utiliser cette ou ces information(s), il faut dans un premier temps que le terminal, une fois qu'il a reçu une information de localisation depuis un équipement d'au moins un réseau d'accès via le module de connexion à ce réseau d'accès, la transfère vers le module de génération des requêtes à des contenus. En effet, cette information de localisation, dans les techniques antérieures, est le plus souvent uniquement utilisée pour les services de mobilité caractérisant les architectures mobiles. Dans cette invention, une indication de localisation basée sur au moins une information de localisation reçue est créée et utilisée pour la sélection d'un serveur et doit donc être transmise à un autre module du terminal, en l'occurrence le module en charge de la création des requêtes d'accès à un contenu, ces requêtes pouvant être des requêtes HTTP ou des requêtes DNS ou tout autre type de protocole utilisé lors d'échanges de contenus entre un terminal et un serveur. Ainsi le terminal, lorsqu'il établit une requête http ou bien une requête DNS pour un service donné, est en mesure d'ajouter une indication de localisation, basée sur au moins une information de localisation, à cette requête et ainsi permettre l'exploitation de cette information. Une fois cette information ajoutée à la requête, le terminal transmet cette requête incluant l'indication de localisation, au serveur de sélection, le plus souvent un serveur DNS ou http. Ainsi le serveur de sélection dispose d'un élément d'information de localisation du terminal qui est fiable et qui peut être exploité pour sélectionner un serveur de contenus pertinent par rapport à la localisation du terminal.

Selon une caractéristique particulière, la requête d'accès à un contenu du procédé d'accès est une requête de type http.

Le client utilise un terminal connecté à un réseau d'accès et ouvre un navigateur pour accéder à des contenus de type http. Selon l'invention, le terminal a été informé de sa localisation, via une information transmise par au moins un réseau d'accès, et construit une requête http en incluant l'indication de localisation basée sur une information de localisation obtenue depuis au moins un réseau d'accès.

Dans le cas du protocole http, l'information de localisation pourra être transmise dans le message GET http envoyé par le terminal pour solliciter le serveur de contenus.

Selon l'implémentation du terminal, il peut s'agir d'un fonctionnement par défaut et dans ce cas, toutes les requêtes http intègrent cette information de localisation, indépendamment du fait que celle-ci soit effectivement prise en compte ou non par le serveur http sollicité. Une autre option consiste à une pré-configuration du terminal consistant à n'inclure cette information de localisation que pour une liste limitée de contenus pour lesquels cette information est effectivement prise en compte pour la sélection du serveur de contenus le plus adapté. Cette pré-configuration pour une mise en œuvre dynamique pourrait consister en une sollicitation de la part du serveur selon le contenu demandé, par exemple pour un fournisseur de contenus ou un domaine spécifique.

Cette indication de localisation transmise dans la requête http pourra notamment être utilisée pour les redirections http, où un serveur de contenus renvoie au terminal une information de redirection pour des raisons diverses, notamment parce qu'un contenu est disponible à une autre adresse ou bien pour répartir la charge sur plusieurs serveurs. Ici, l'indication de localisation pourra être utilisée pour déterminer un nouveau serveur de contenus et le serveur de sélection pourra envoyer le message de redirection http vers le terminal utilisateur via un message « http redirect ». Le terminal utilisateur, à la réception de ce message, est en mesure d'accéder au contenu souhaité en sollicitant le serveur de contenus dont l'adresse a été envoyée par le serveur de sélection dans le message « http redirect ».

Selon une autre caractéristique particulière, la requête d'accès à un contenu du procédé d'accès est une requête de type DNS.

L'indication de localisation pourra avantageusement être utilisée pour enrichir les requêtes DNS envoyées par le terminal et relayées par les serveurs DNS intermédiaires jusqu'au serveur DNS final ou d'autorité, celui-ci fournissant l'adresse IP du serveur auquel le terminal doit se connecter pour accéder au contenu recherché. L'indication de localisation transmise dans la requête DNS émise par le terminal donne un moyen au serveur DNS sollicité de pouvoir associer un serveur de contenus en fonction de l'indication de localisation transmise dans la requête. Cette indication, dans une première option, pourra être transmise de façon systématique avec toutes les requêtes DNS émises par le terminal indépendamment du fait que cette information soit supportée et prise en compte par les serveurs DNS ou non. Une alternative consiste à n'insérer cette indication de localisation que dans certaines requêtes DNS, par exemple pour des contenus spécifiques, parce que les serveurs impliqués dans la résolution du nom sont compatibles et peuvent effectivement tirer parti de l'indication insérée par un terminal utilisateur.

A partir de l'indication de localisation, le serveur DNS en charge de la résolution du nom de domaine relatif au contenu sollicité par le terminal renvoie l'adresse du serveur de contenus que le terminal doit joindre pour effectivement accéder au contenu.

Selon une autre caractéristique particulière, le procédé d'accès est mis en œuvre sur un réseau d'accès de type cellulaire et l'information relative à la localisation est basée sur un paramètre de type « Tracking Area ».

Dans le cas où le terminal est connecté à un réseau cellulaire par exemple de quatrième génération, c'est à dire à un réseau LTE (en anglais Long Term Evolution), l'information de localisation reçue depuis le réseau LTE est constituée de paramètres formant le TAI (en anglais Tracking Area Identity). Cette information peut être avantageusement utilisée pour déterminer une localisation géographique du terminal. Dans un réseau LTE, le terminal est informé lors de son attachement de la zone identifiée comme Tracking Area à laquelle il appartient, cette zone pouvant recouvrir plusieurs cellules ou plusieurs équipements de type eNodeB selon la configuration du réseau par l'opérateur. Afin de limiter le nombre de mises à jour de Tracking Area envoyées par le terminal au MME (en anglais Mobility Management Entity) du réseau LTE lorsque le terminal se trouve en mobilité, le terminal est généralement informé d'une liste de « Tracking Areas » grâce à une information de type TAL (en anglais Tracking Area List). Le terminal pourra utiliser au choix l'information TAI, ou une de ses composantes telle que le TAC (en anglais Tracking Area Code), ou bien l'information TAL pour générer une indication de localisation dans ses messages de requête d'accès à un contenu. Par exemple, le terminal pourra insérer dans ses requêtes http, DNS ou d'autre type, la liste TAL reçue du réseau LTE ou bien seulement une partie des Tracking Areas présentes dans la liste, voire un identifiant de liste TAL si cette indication de localisation peut être exploitée par le serveur de sélection. Cette information basée sur les Tracking Area est d'ores et déjà présente et utilisée dans les réseaux mobiles notamment à des fins de localisation pour des services de mobilité. Elle pourra donc avantageusement être exploitée à d'autres fins telles que la sélection d'un serveur de contenus adapté par rapport à la localisation du terminal.

Selon une autre caractéristique particulière, le procédé d'accès est mis en œuvre sur un réseau d'accès de type Wi-Fi et l'information relative à la localisation est basée sur un paramètre de type SSID (en anglais Service Set Identifier).

Dans le cas où le terminal est connecté à un réseau WLAN, par exemple un réseau Wi-Fi, l'information de localisation reçue depuis ce réseau Wi-Fi est l'information SSID. Cette information peut être avantageusement utilisée pour déterminer une localisation géographique du terminal à condition que les différents SSID auxquels les terminaux peuvent potentiellement se connecter soient référencés et puissent effectivement se voir associer une localisation suffisamment précise pour effectivement sélectionner un serveur de contenus proche de l'utilisateur connecté au réseau Wi-Fi en question. Dans le cas où le réseau Wi-Fi est un réseau administré par l'opérateur ou bien par une entité en relation avec l'opérateur gérant le serveur de sélection, les différents SSIDs gérés par l'opérateur ou l'entité peuvent servir à sélectionner un serveur de contenus en proximité du terminal utilisateur. Dans le cas où un terminal est connecté à plusieurs réseaux Wi-Fi simultanément, les différentes informations de type SSID reçues des différents réseaux Wi-Fi pourront avantageusement permettre de générer une indication de localisation basée sur ces différentes informations SSID.

Le cas d'usage décrit présente l'avantage de pouvoir s'appliquer aux terminaux Wi-Fi non-cellulaires. De plus ils permettent une meilleure performance perçue par l'utilisateur et une meilleure utilisation des ressources réseau dans les cas de mobilité entre accès en cours de session de données.

Les différents aspects du procédé d'accès qui viennent d'être décrits peuvent être mis en œuvre indépendamment les uns des autres ou en combinaison les uns avec les autres.

A la réception d'une requête d'accès à un serveur de contenus reçue, le serveur de sélection, s'il est le serveur en charge de la sélection effective du service de contenus auprès duquel le terminal pourra accéder au contenu, sélectionne un serveur en prenant en compte l'indication de localisation présente dans la requête. Dans le cas où il s'agit d'un serveur accessible par une requête HTTP, un serveur HTTP ou un serveur CDN, celui-ci pourra utiliser une table permettant de faire une correspondance entre une indication de localisation et un serveur de contenus, permettant in fine d'informer l'utilisateur de l'adresse IP d'un serveur à proximité, par exemple en envoyant un message de redirection HTTP comportant l'adresse IP du serveur de contenu sélectionné. De la même façon, si le serveur de résolution est un serveur DNS, celui-ci utilisera l'information de localisation pour sélectionner par exemple un serveur HTTP, un serveur CDN voire un serveur FTP, proche du terminal utilisateur et indiquer l'adresse IP de ce serveur au terminal ayant effectué la requête d'accès.

Les infrastructures de type CDN et de type DNS étant le plus souvent déployées de façon hiérarchique, il est très fréquent qu'une requête d'accès à un contenu soit routée de proche en proche par des serveurs intermédiaires jusqu'au serveur final, ayant la charge effective de sélectionner le serveur de contenus et d'en informer le terminal utilisateur. Ces serveurs de sélection intermédiaires ne sélectionnent pas eux-mêmes certains serveurs de contenus mais ne doivent pas filtrer, modifier ou supprimer l'indication relative à la localisation lorsqu'ils reçoivent puis retransmettent la requête à un contenu vers un autre serveur de sélection. Ils doivent donc, lorsqu'ils reçoivent une requête d'accès à un contenu incluant une indication de localisation, s'assurer que cette requête est retransmise avec l'indication de localisation vers le serveur de sélection suivant.

Selon une caractéristique particulière, le procédé de sélection comprend en outre une étape de consultation d'une table de correspondance entre des indications de localisation relatives à au moins deux types de réseaux d'accès.

Si le terminal utilisateur est connecté à un réseau Wi-Fi et à un réseau cellulaire, il est susceptible de recevoir à la fois une information de localisation de type Tracking Area et une information de type SSID, auquel cas le terminal peut générer une indication de localisation basée sur ces deux informations de localisation ou bien générer deux indications de localisation, basées sur les deux informations respectives. Notamment, un terminal pourra être simultanément connecté à au moins deux réseaux d'accès simultanément et recevoir plusieurs informations de localisation simultanément, à partir desquelles il générera une ou plusieurs indications de localisation. Il est à noter qu'il n'est pas nécessaire qu'il soit connecté au réseau cellulaire pour avoir deux informations de localisation. Dans le cas où le terminal a des capacités de connexion à un réseau cellulaire, avec une carte SIM (en anglais Subscriber Identity Module) active, et qu'il s'est attaché précédemment à un réseau cellulaire, il a en mémoire une information de type TA même s'il n'est pas connecté au réseau cellulaire alors qu'il se connecte au réseau Wi-Fi.

Si le terminal est susceptible de se connecter à un réseau Wi-Fi ou à un réseau LTE, on peut aussi envisager la construction automatique d'une table de correspondance entre les informations SSID et les informations liées au TA (Tracking Area), interfacée avec le sélecteur de contenu. Dans un premier mode, tout terminal connecté à un réseau Wi-Fi enverrait son identifiant SSID d'accès Wi-Fi dans sa requête de contenu. La sélection de serveur de contenu se ferait ensuite sur la base de la correspondance SSID - TA qui pourrait être élaborée à partir des informations TA et SSID transmises par les terminaux en capacité à se connecter à des réseaux Wi-Fi et cellulaires. Un autre mode possible d'utilisation de cette correspondance serait une évolution des accès Wi-Fi qui ferait que les points d'accès Wi-Fi diffusent aux terminaux ces paramètres TAI et TAL aujourd'hui exclusivement diffusés sur réseaux cellulaires. Ainsi l'identifiant de localisation serait identique entre réseaux cellulaires et réseaux Wi-Fi, pour une gestion de sélection de serveur plus simple et une homogénéisation entre les architectures Wi-Fi et LTE.

La création et la mise à jour de la table de correspondance peut s'opérer de différentes façon. Notamment, il peut être envisagé que l'opérateur ou le fournisseur de table de correspondance réalise et mette à jour une table de correspondance sur la base d'une cartographie des coordonnées géographiques des équipements fournissant les informations de localisation, par exemple SSID et TAI. Cette table pourra également avantageusement bénéficier des informations issues des cartes de couverture radio cellulaires. La table de correspondance pourrait également être créée et mise à jour par une méthode d'apprentissage, où les indications de localisation recueillies des terminaux et complétées avec d'autres informations telles que l'identifiant du terminal, l'identifiant de session et ses coordonnées GPS seraient enregistrées pour alimenter la table de correspondance. Ces méthodes proposées ne sont pas exclusives et pourraient également être utilisées conjointement.

L'invention concerne aussi un système d'accès à un contenu comprenant au moins un serveur de sélection et au moins un terminal.

Dans un autre mode de réalisation, l'invention concerne un ou plusieurs programmes d'ordinateur comportant des instructions pour la mise en œuvre d'au moins un procédé tel que décrit ci-dessus, lorsque ce ou ces programmes sont exécutés par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

### 4. Liste des figures

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
La figure 1 illustre de façon schématique un système d'accès à un contenu faisant intervenir un terminal utilisateur connecté à au moins un réseau d'accès et un serveur de sélection. Le serveur de sélection peut être un serveur DNS, un serveur HTTP ou tout autre type de serveur.
La figure 2 illustre les différentes étapes du procédé d'accès selon un mode de réalisation de l'invention où le serveur de sélection est un serveur DNS.
La figure 3 illustre les différentes étapes du procédé d'accès selon un autre mode de réalisation de l'invention où le serveur de sélection est un serveur HTTP.
La figure 4 illustre les différentes étapes du procédé de sélection selon un autre mode de réalisation de l'invention où le terminal est successivement connecté à deux réseaux d'accès différents.
La figure 5 illustre la structure d'un terminal utilisateur mettant en œuvre les différentes étapes du procédé d'accès selon un mode particulier de réalisation.
La figure 6 illustre la structure d'un serveur de sélection d'un contenu mettant en œuvre les différentes étapes du procédé de sélection selon un mode particulier de réalisation.

### 5. Description détaillée d'au moins un mode de réalisation de l'invention

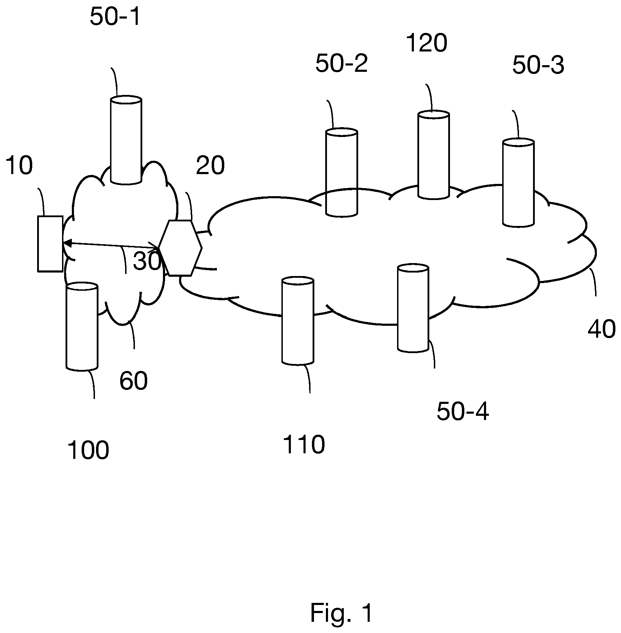

On se réfère tout d'abord à la figure 1 qui illustre de façon schématique un système d'accès à un contenu faisant intervenir un terminal utilisateur connecté à au moins un réseau d'accès, ainsi qu'un serveur de sélection.

Sur cette figure, est représenté un terminal utilisateur 10 qui est connecté à un équipement d'accès 20. Le terminal utilisateur 10 peut aussi bien être un terminal mobile qu'un ordinateur ou une passerelle domestique ou tout autre équipement capable de communiquer avec l'équipement d'accès 20 en utilisant une connexion filaire ou radio 30. Sur cette figure, sont également représentés des serveurs de contenus 50-1, 50-2, 50-3, 50-4 déployés à des localisations différentes du réseau de communications composé de l'infrastructure d'accès 60 et de l'infrastructure de transport 40. Ces infrastructures d'accès 60 et de transport 40 peuvent indifféremment être des réseaux de type radio ou filaire. Sur cette figure 1 est en outre présenté un serveur de sélection 110 intervenant dans le procédé de sélection de serveur de contenus parmi ceux déployés 50-1, 50-2, 50-3, 50-4 au sein du réseau de communications. Sur cette figure 1, sont en outre représentés des serveurs DNS. L'un des serveurs nommé serveur DNS primaire 100 auquel le terminal 10 se connecte par défaut pour une résolution de nom et un autre dit global 120, ici considéré comme le serveur d'autorité assurant la résolution effective du nom du serveur de contenus auquel doit accéder le terminal 10. Cette figure 1 illustre un mode particulier de réalisation et dans d'autres modes de réalisation, plus de serveurs DNS, plus de serveurs de sélection et plus de serveurs de contenus pourraient notamment être pris en compte. De plus, le terminal pourrait être simultanément connecté à plusieurs équipements d'accès utilisant éventuellement des technologies d'accès différentes.

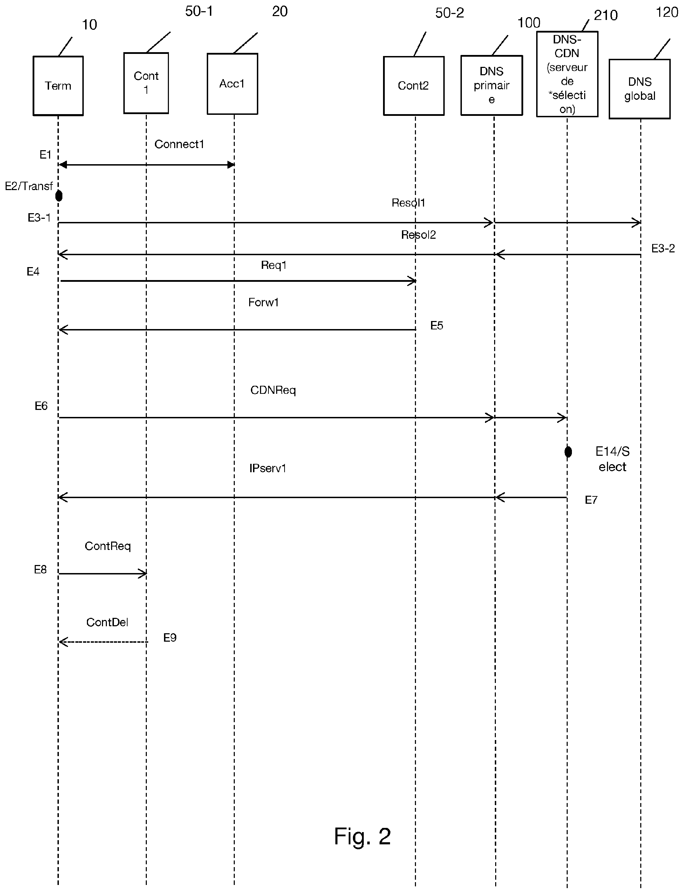

On se réfère à présent à la figure 2 qui illustre les différentes étapes du procédé d'accès selon un mode de réalisation de l'invention.

Dans ce mode de réalisation, le serveur de sélection 210 est un serveur DNS qui informe le terminal 10 sur le serveur de contenus 50-1 à joindre.

Lors d'une étape E1 le terminal utilisateur 10 se connecte à un équipement d'accès 20. Cet équipement d'accès 20 selon les modes de réalisation peut être une passerelle d'accès à un réseau cellulaire de type LTE, UMTS ou de toute autre infrastructure mobile par exemple une PDN-GW (en anglais Packet Data Network Gateway), un équipement d'accès à un réseau Wi-Fi tel qu'un point d'accès, un équipement d'accès à un réseau fixe tel qu'un BRAS (en anglais Broadband Remote Access Server) ou une BNG (en anglais Broadband Network Gateway). Lors de cette étape de connexion E1 à un équipement d'accès 20, le terminal 10 est configuré avec une adresse IP et peut également obtenir des informations parmi lesquelles l'adresse IP du serveur DNS primaire 100 à contacter pour accéder au service de résolution de noms.

Lors de cette étape de connexion à l'équipement d'accès 20, le terminal 10 reçoit en outre une information de sa localisation courante par rapport à la topologie du réseau. S'il s'agit d'une connexion à un réseau LTE, cette information sera l'information Tracking Area (TA) envoyée par un équipement du réseau mobile permettant la localisation du terminal dans un tel réseau. S'il s'agit d'un réseau UMTS ou GPRS, l'information de localisation sera de type Location Area (LA) et/ou Routing Area (RA). Toute information de localisation voire d'identifiant de réseau obtenue par le terminal utilisateur du réseau d'accès pourra être mise à profit pour la mise en œuvre du procédé d'accès. A des fins de simplification, l'étape de connexion E1 ne présente pas les différentes phases successives pouvant intervenir lorsqu'un terminal 10 se connecte à un équipement d'accès 20. Notamment s'il s'agit d'un réseau d'accès LTE, cette étape de connexion E1 peut se décomposer en phases d'attachement radio, en phases de contrôle d'accès au réseau et en phase de connexion réseau faisant intervenir différents équipements de l'architecture LTE parmi lesquels les équipements eNodeB, les S-GW (en anglais Serving Gateway), les PDN-GW (en anglais Packet Data Network Gateway), les MME (en anglais Mobility Management Entity), le serveur HSS (en anglais Home Subscriber Server) voire des serveurs PCRF (en anglais Policy and Charging Rules Function) et AAA (en anglais Authentication Authorization Accounting). L'information Tracking Area sera notamment transmise par le MME dans l'architecture LTE grâce à des messages de la couche NAS (en anglais Non Access Stratum) faisant partie de l'étape de connexion E1 ici décrite. De façon identique, la connexion du terminal 10 à un équipement d'accès Wi-Fi, ADSL ou optique est réduite à l'étape de connexion E1 mais regroupe plusieurs échanges entre le terminal et les équipements du réseau d'accès. Cette invention, quel que soit le mode de réalisation, considère qu'une information relative à sa localisation est envoyée au terminal 10 par un équipement d'accès 20 au cours de l'étape de connexion E1.

Lors d'une étape E2, l'information de localisation transmise par l'équipement d'accès au cours de l'étape E1 est transmise au terminal 10 de façon à ce qu'il génère des requêtes d'accès à un contenu comprenant une indication de localisation basée sur l'information de localisation reçue d'un équipement d'accès 20. Un mode de réalisation consiste pour le terminal à générer une requête d'accès contenant l'information de localisation reçue lors de l'étape E1. Un autre mode de réalisation consiste à déterminer une indication de localisation basée sur une ou plusieurs informations de localisation reçue. Si le terminal 10 est connecté simultanément à plusieurs équipements d'accès différents, par exemple des réseaux de type Wi-Fi et LTE, il recevra plusieurs informations de localisation provenant des différents équipements d'accès des réseaux. Dans ce cas, il pourra générer une indication de localisation basée sur ces informations de localisation, en sélectionnant l'une de ces informations pour générer l'indication de localisation, ou en générant une indication basée sur les différentes informations de localisation reçues des équipements d'accès selon le mode de réalisation retenu.

Lors d'une étape E3-1 le terminal contacte son serveur DNS primaire 100 qui lui-même sollicite le serveur DNS 120 autoritaire pour le nom de l'hôte du serveur de contenus 50-2 et pouvant donc effectivement fournir l'adresse IP de ce serveur présentant le contenu auquel le terminal 10 souhaite accéder. Au cours de l'étape E3-2, le serveur DNS d'autorité 120 retourne via le serveur DNS primaire 100 une réponse à la sollicitation transmise lors de l'étape E3-1.

Lors d'une étape E4, le terminal 10 envoie une requête d'accès à un serveur de contenu 50-2. Dans ce mode de réalisation, la requête d'accès est une requête HTTP vers un serveur HTTP 50-2 dont le terminal aura obtenu l'adresse par configuration DHCP ou lors des échanges des étapes E3-1 et E3-2. La requête d'accès émise lors de l'étape E4 comprend l'indication de localisation générée par le terminal 10 lors de l'étape E2 à partir de l'au moins une information de localisation reçue. Le serveur HTTP 50-2 lors de l'étape E5 renvoie dans un message de réponse une information sur le serveur CDN à contacter - par exemple sous la forme d'une URL (en anglais Universal Resource Locator) - pour que le terminal 10 puisse effectivement accéder au contenu demandé.

Dans ce mode de réalisation, le serveur de sélection est un serveur DNS. Ce serveur assure la résolution du nom du serveur CDN qu'il aura sélectionné pour donner suite à la requête envoyée par le terminal 10 lors de l'étape 4.

A partir de cette information sur le serveur CDN à contacter, le terminal 10 envoie lors d'une étape E6 une requête DNS vers le serveur DNS d'autorité 210 du serveur CDN indiqué dans le message de réponse envoyé lors de l'étape E5. Cette requête DNS, pourra éventuellement être envoyée via le serveur DNS primaire 100 du terminal 10 et comprend l'indication de localisation générée par le terminal 10. A la réception de la requête DNS, le serveur 210 sélectionne, lors d'une étape E14, un serveur de contenus 50-1 proche du terminal 10 en fonction de l'indication de localisation. Lors de l'étape E7, le serveur DNS 210 renvoie au terminal 10 l'adresse IP du serveur de contenus 50-1 que le terminal doit joindre pour accéder au contenu. Le serveur DNS 210 ayant utilisé l'indication de localisation transmise dans la requête DNS émise lors de l'étape E6 sélectionne le serveur de contenus 50-1, celui-ci étant d'un point de vue géographique et/ou topologique le plus proche du terminal 10.

Le terminal 10 lors d'une étape E8 sollicite le serveur de contenu 50-1 en envoyant une requête d'accès HTTP. Le serveur 50-1 transmet en réponse lors d'une étape E9 le contenu sollicité via une requête HTTP de livraison de contenu à destination du terminal 10.

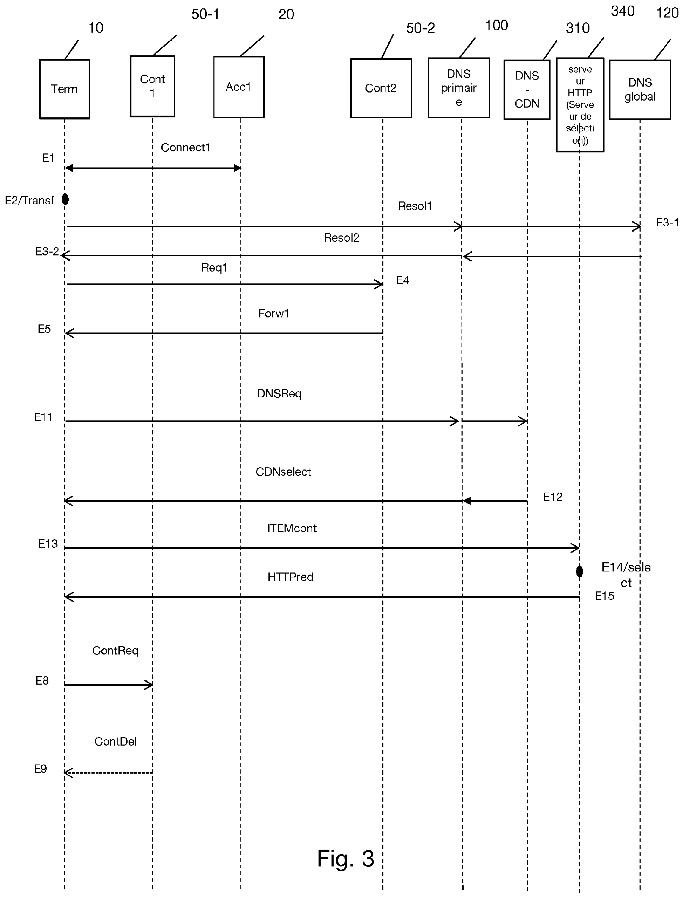

On se réfère maintenant à la figure 3 qui illustre les différentes étapes du procédé de sélection selon un autre mode de réalisation de l'invention. Dans ce mode de réalisation, le serveur de sélection 340 est un serveur HTTP qui informe le terminal sur le serveur de contenus 50-1 à joindre via un message HTTP redirection.

Les étapes E1 à E5 sont strictement identiques à celles décrites pour la figure 2. Lors d'une étape E11 le terminal 10 sollicite le serveur DNS 310 du serveur CDN dont il a reçu le nom dans le message émis lors de l'étape E5 par le serveur de contenus 50-2. Lors de cette étape E11, l'indication de localisation n'est pas intégrée à la requête DNS envoyée au serveur DNS 310. Cette indication, si elle est intégrée à la requête DNS par exemple pour des questions de facilité d'implémentation ne sera pas interprétée par le serveur DNS 310 et celui-ci ne détermine pas de serveur de contenus adapté. Ce mode de réalisation se différencie du mode de réalisation décrit dans la figure 2 car le serveur DNS 310 n'assure pas la fonction de serveur de sélection et supporte uniquement les fonctions classiques de serveur DNS. En réponse à la requête DNS envoyée par le terminal 10 via son serveur DNS local 100, le serveur DNS 310 assurant la résolution du nom du serveur 340 renvoie dans un message l'adresse IP du serveur 340 au terminal 10 lors d'une étape E12. Ce message peut optionnellement être émis par le serveur DNS primaire 100 grâce à un mécanisme de mise en cache. Dans ce cas le message de l'étape E11 n'a pas eu besoin d'être relayé par le serveur 100 au serveur 310.

Le terminal 10, à la réception du message DNS indiquant l'adresse IP du serveur 340 à contacter pour accéder au contenu, envoie un message de requête d'accès de type HTTP à l'adresse IP du serveur de sélection 340 lors d'une étape E13. Cette requête d'accès HTTP inclut l'indication de localisation. A la réception de la requête d'accès, le serveur 340 sélectionne, lors d'une étape E14, un serveur de contenus 50-1 proche du terminal 10 en fonction de l'indication de localisation. Lors d'une étape E15, le serveur 340 envoie un message de type HTTP redirection comprenant une URL indiquant au terminal 10 le serveur de contenus 50-1 auprès duquel le terminal 10 peut accéder au contenu souhaité.

Une étape de résolution DNS de cette URL est nécessaire (entre étapes E15 et E8) mais n'est pas présentée ici comme une étape pour des questions de facilité de lecture. Les étapes E8 et E9 de la figure 3, faisant suite à l'étape E15 décrite précédemment, sont identiques aux étapes E8 et E9 de la figure 2.

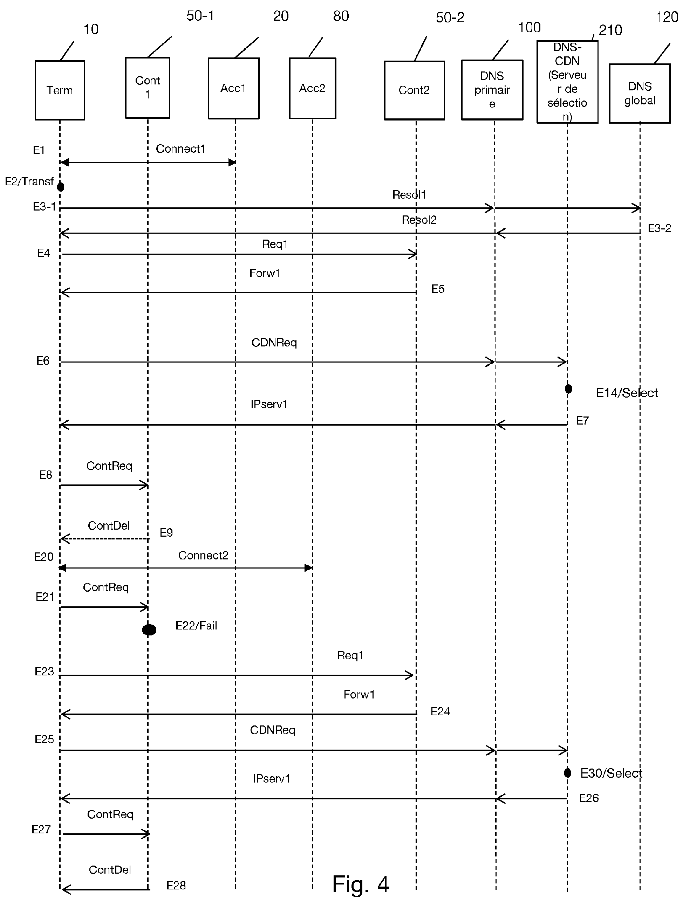

On se réfère maintenant à la figure 4 qui illustre les différentes étapes du procédé de sélection selon un autre mode de réalisation de l'invention, dans lequel le terminal utilisateur 10 se connecte successivement à deux réseaux d'accès différents. Dans ce mode de réalisation, les premières étapes depuis l'étape E1 jusqu'à l'étape E9 de la figure 4, y compris l'étape E14, sont identiques aux étapes correspondantes de la figure 2 et ne sont donc pas décrites à nouveau. Dans le mode de réalisation décrit dans la figure 4, une fois que le terminal accède au contenu hébergé sur le serveur de contenus 50-1, le terminal 10 se connecte à un autre équipement d'accès 80 et n'est plus connecté à l'équipement d'accès 20 auquel il était jusqu'alors connecté pour accéder au contenu. Le terminal 10 n'a pas forcément bougé et peut se trouver géographiquement au même endroit mais il est connecté à un autre équipement d'accès. Différentes raisons peuvent expliquer cette connexion à autre équipement d'accès. L'équipement d'accès 20 peut être indisponible, une politique opérateur peut forcer une connexion à un réseau donné, ou bien la configuration du terminal 10 peut privilégier une connexion à l'équipement d'accès 80 par rapport à l'équipement d'accès 20, ce qui peut être le cas dans certaines options de configuration si l'équipement d'accès 80 est une passerelle Wi-Fi alors que l'équipement d'accès 20 est une passerelle d'accès à un réseau LTE. Dans le cas où les deux équipements d'accès fournissent un accès à des réseaux de technologie différente, il est très probable que d'une part l'adresse IP allouée au terminal 10 change lorsque celui-ci est connecté successivement à deux réseaux d'accès différents, et d'autre part il est possible que les serveurs CDNs ne soient pas les mêmes. La conséquence de ce changement de connexion du terminal 10 induit aussi une interdiction d'accès dans un premier temps du terminal 10 au contenu hébergé sur le serveur 50-1 si le serveur de contenu 50-1 effectue un contrôle d'accès basé sur l'adresse IP du terminal 10. Celui-ci ne peut plus accéder aux contenus du serveur 50-1 suite à sa connexion à l'équipement d'accès 80 et la requête d'accès au contenu envoyée lors de l'étape 21 se voit refusée et une rupture de connexion entre le terminal 10 et le serveur de contenu 50-1 survient lors de l'étape E22. En l'absence de réponse du serveur de contenus 50-1 ou bien si le serveur de contenus renvoie un message d'interdiction d'accès au terminal 10, le terminal 10 sollicite via une requête d'accès à un contenu le serveur de contenus par défaut lors d'une étape E23 après intervention de l'utilisateur ou non selon les cas, dans le but de relancer l'application. L'adresse IP de ce serveur de contenu par défaut, dans l'exemple le serveur de contenus 50-2, pourra être obtenue après une nouvelle sollicitation du serveur DNS global 120, ou bien elle pourra être mise en mémoire par le terminal 10 ou par le DNS primaire 100 lors des sollicitations et réponses DNS des étapes respectives E3-1 et E3-2.

Lors de l'étape E24, le serveur de contenus 50-2 renvoie l'information sur le serveur CDN au terminal 10 pour que celui-ci puisse accéder au contenu souhaité.

Grâce à cette information qui pourra consister en une URL permettant d'accéder au serveur CDN disposant du contenu, conformément à ce qui se déroule lors de l'étape E5, le terminal 10 sollicite le serveur de sélection 210 qui dans ce mode de réalisation est le serveur DNS d'autorité du serveur CDN. Lors de l'étape E25, de façon similaire à l'étape 6, le terminal 10 envoie une requête DNS comprenant l'indication de localisation issue de l'information de localisation envoyée par l'équipement d'accès 80 lorsque le terminal 10 s'y est connecté, vers le serveur DNS d'autorité 210 du serveur CDN. Ce serveur DNS 210, à partir de l'indication de localisation, sélectionne le serveur de contenus 50-1 à proximité du terminal lors de l'étape E30 et envoie l'adresse IP de ce serveur lors de l'étape E26.

Afin de sélectionner un serveur de contenus 50-1 proche du terminal utilisateur indépendamment du réseau d'accès auquel se connecte ce terminal, le serveur DNS 210 peut utiliser une table de correspondance entre indications de localisation de différents réseaux d'accès. Par exemple, dans le cas d'usage de la figure 4, les équipements d'accès 20 et 80 transmettent des informations de localisation propres à la technologie du réseau d'accès. Cela peut être l'information TAI si l'équipement 20 est un équipement du réseau LTE et l'information SSID si l'équipement 80 est un équipement d'un réseau Wi-Fi. Le serveur DNS 210, lorsqu'il reçoit la requête comprenant l'indication de localisation basée sur l'information émise par l'équipement 80, en l'occurrence le SSID, peut déduire à partir de la table de correspondance que l'indication reçue dans la requête correspond à l'indication reçue dans la requête comprenant l'indication basée sur l'information reçue de l'équipement 20, le TAI du réseau LTE. Cette table peut par ailleurs également intégrer par exemple un identifiant du terminal utilisateur voire un identifiant de session. Dans l'exemple retenu, le serveur fait une correspondance entre les informations SSID et les informations de type TAI. Ainsi le serveur DNS 210 est en mesure de sélectionner le même serveur de contenus, que le terminal 10 soit connecté à l'équipement d'accès 20 ou l'équipement d'accès 80. Cette table permet en outre de sélectionner des serveurs de contenus en fonction de l'indication de localisation d'une seule technologie, par exemple les TAI. La table assure la correspondance entre les indications de localisation propres à d'autres technologies, par exemple le Wi-Fi, et l'indication de technologie utilisée pour la sélection, l'indication propre au réseau LTE dans l'exemple. L'autre intérêt d'une table de correspondance entre indications de localisation pour un terminal est d'être connecté à un même serveur de contenu s'il se connecte successivement à deux réseaux d'accès dans une même zone géographique, ce qui permet avantageusement de maintenir les contextes d'accès, bénéficier d'un cache déjà alimenté avec le contenu en cours de livraison, et maintenir l'état de sessions applicatives. Cela permet ainsi une utilisation optimale du CDN et Fog computing en mobilité (lorsque le terminal utilisateur change de réseau d'accès) avec un gain pour l'utilisateur en latence et pour l'opérateur sur le coût des réseaux.

Les étapes E27 et E28 qui suivent sont ensuite identiques aux étapes E8 et E9 décrites précédemment, ces étapes consistant pour le terminal 10 à accéder au contenu désiré hébergé sur un serveur de contenus 50-1 proche du terminal. Dans ce mode de réalisation, le serveur de contenus sélectionné par le serveur de sélection 210 est le même lors de la connexion du terminal 10 à l'équipement d'accès 80 que lorsque le terminal 10 est connecté à l'équipement d'accès 20. Dans ce mode de réalisation, le terminal 10 ne s'est pas déplacé de façon suffisante pour justifier que le serveur de contenus change et il est logique que le serveur de contenus 50-1 sélectionné reste le même lorsque le terminal 10 change de connexion.

Des échanges d'informations entre le serveur de contenus 50-2, le serveur local 50-1 et les équipements d'accès 20 et 80 non reportés sur cette figure, notamment liés aux autorisations d'accès, permettent au serveur de contenus 50-1 d'accepter la connexion du terminal 10, dont l'adresse IP a été allouée lors de sa connexion à l'équipement d'accès 80.

Cette invention permet ainsi de sélectionner au plus près possible des utilisateurs des serveurs de contenus communs pour les différents réseaux d'accès auxquels un terminal est susceptible de se connecter dans un environnement donné. Elle permet également de conserver l'accès à un même serveur de contenus lorsque le terminal change de réseau d'accès en cours de session mais sans changer de localisation, permettant ainsi de conserver un contexte, lié par exemple à l'utilisation d'une application par le terminal. Dans un autre mode de réalisation, des messages HTTP pourraient être transmis lors d'étapes supplémentaires, notamment dans le cas où les serveurs DNS ne sont pas des serveurs de sélection. Ces messages, de la même façon que ce qui est décrit dans la figure 3, seraient un message de requête HTTP vers le serveur de contenus, en l'occurrence un serveur HTTP, auquel celui-ci répondrait par un message de redirection HTTP conformément aux messages des requêtes E13 et E15 de la figure 3. Ces serveurs HTTP peuvent en outre également s'interfacer avec des tables de correspondance d'indications de localisation comme décrit pour le cas où le serveur de sélection est un serveur DNS.

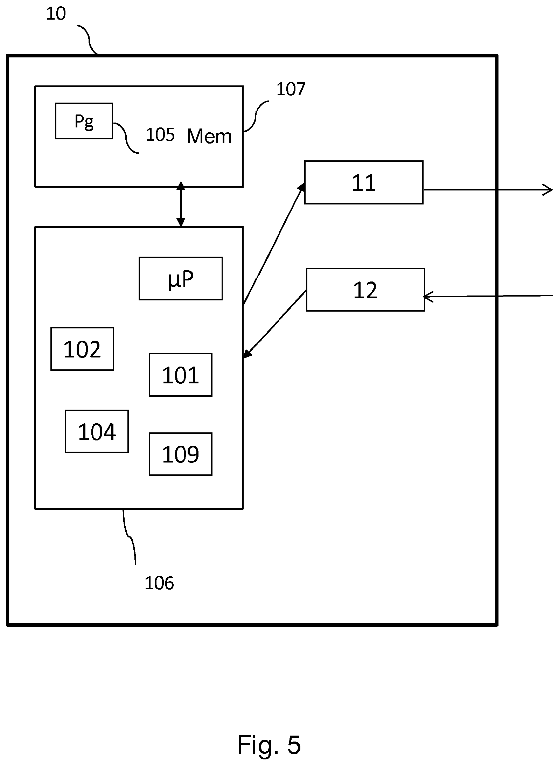

On se réfère maintenant à la figure 5 qui illustre les fonctions d'un terminal utilisateur agencé pour accomplir les différentes étapes du procédé d'accès au contenu selon un mode particulier de réalisation.

Par exemple, le terminal 10 comprend une unité de traitement 106, équipée par exemple d'un microprocesseur µP, et pilotée par un programme d'ordinateur 105, stocké dans une mémoire 107. A l'initialisation, les instructions de code du programme d'ordinateur 105 sont par exemple chargées dans une mémoire RAM, avant d'être exécutées par le processeur de l'unité de traitement 106. Le terminal comprend une interface 11 d'émission de messages et une interface 12 de réception de messages.

Un tel terminal utilisateur comprend en outre les modules suivants:
- un module 101 apte à traiter un message reçu en provenance de l'équipement d'accès comprenant une information relative à la localisation dudit terminal utilisateur 10
- un générateur 104 de requête d'accès à un contenu comprenant une indication de localisation obtenue sur la base de l'information extraite du message
- un module 102 apte à traiter un message d'émission de la requête d'accès générée vers un serveur 110 apte à sélectionner un serveur de contenus 50-1
- un module 109 apte à traiter un message comprenant une adresse du serveur de contenus sélectionné 50-1

Ce terminal utilisateur pourra par exemple être un terminal mobile. Ce terminal mobile peut se connecter à des réseaux d'accès de type 802.11, GPRS, UMTS (en anglais Universal Mobile Telecommunications Systems), HSPA (en anglais High Speed Packet Access), LTE ou tout autre réseau basé sur une technologie WLAN (en anglais Wireless Local Area Network) ou cellulaire, et peut accéder à un contenu hébergé sur un serveur proche de sa localisation, réduisant ainsi le temps et le coût d'accès de ce terminal au contenu.

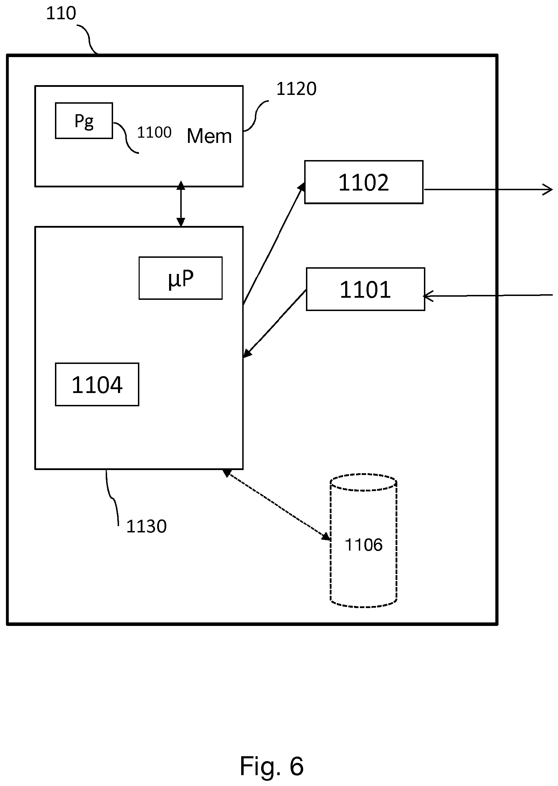

On se réfère maintenant à la figure 6 qui illustre les fonctions d'un serveur de sélection agencé pour accomplir les différentes étapes du procédé de sélection selon un mode particulier de réalisation.

Par exemple, le serveur de sélection comprend une unité de traitement 1130, équipée par exemple d'un microprocesseur µP, et pilotée par un programme d'ordinateur 1100, stocké dans une mémoire 1120. A l'initialisation, les instructions de code du programme d'ordinateur 1100 sont par exemple chargées dans une mémoire RAM, avant d'être exécutées par le processeur de l'unité de traitement 1130.

Un tel serveur de sélection comprend les modules suivants:
- un récepteur 1101 de message de requête d'accès à un contenu en provenance d'un terminal utilisateur 10 comprenant une indication de localisation dudit terminal utilisateur,
- un module de sélection 1104 de serveur de contenus 50-1 en fonction de l'indication de localisation
- un émetteur 1102 de message comprenant une adresse dudit serveur de contenus vers le terminal utilisateur 10

Optionnellement, le serveur de sélection comprend en outre une table de correspondance (1106) où sont enregistrées entre autres des indications de localisation relatives à au moins deux types de réseaux d'accès.

Un serveur de sélection pourra par exemple être un serveur DNS ou un serveur HTTP, et pourra avantageusement mettre en œuvre le procédé de sélection de façon à renvoyer au terminal utilisateur 10 l'information permettant de joindre un serveur de contenus - hébergeant le contenu demandé par le terminal utilisateur - à proximité du terminal de l'utilisateur. L'indication de localisation peut ainsi être utilisée par le serveur de sélection comme un critère supplémentaire de sélection de serveur de contenus, dans le cas où le serveur utilise déjà d'autres critères de sélection des serveurs de contenus, typiquement pour répartir la charge entre serveurs.

L'invention n'est pas limitée aux exemples de réalisation ci-dessus décrits et représentés et couvre d'autres formes de réalisation.

L'adresse du serveur de contenus renvoyés au terminal pourra être une adresse IP, de type IPv4 ou IPv6, ou il peut s'agir de tout autre moyen permettant au terminal de joindre le serveur de contenus indiqué dans la réponse envoyée par le serveur de sélection, parmi lesquels une URL, voire un nom de type par exemple FQDN (en anglais Fully Qualified Domain Name).

En outre le serveur de sélection, dans les modes de réalisation présentés est un serveur DNS ou un serveur HTTP mais il est également envisageable que le serveur de sélection soit un serveur FTP (en anglais File Transfer Protocol) si le terminal ouvre une connexion FTP vers un serveur de contenus ou tout autre type de serveur. En particulier, dans d'autres modes de déploiement, le serveur de sélection peut être un serveur spécifique dont le rôle est uniquement de sélectionner un serveur de contenus proche de l'utilisateur. Le serveur de sélection, pour sélectionner un serveur de contenus proche de l'utilisateur, pourra avantageusement utiliser une base de données à partir de laquelle il pourra identifier le serveur de contenus adapté en fonction d'au moins une indication de localisation reçue d'un terminal. Cette base de données pourra intégrer d'autres critères que les indications de localisation pour mettre en œuvre une sélection de serveur de contenus tenant compte de différents critères parmi lesquels l'au moins une indication de localisation.

Une base de données du serveur de sélection agencée pour enregistrer des serveurs de contenus et des indications de localisation reçues dans les messages de requêtes d'accès peut elle-même être partagée entre différents serveurs de sélection de façon à limiter le nombre de base de données et de permettre que les serveurs de sélection du réseau de communications bénéficient d'une base de données unique ou au moins un nombre limité de bases de données. Cette base de données, de façon conforme à ce qui est indiqué pour la table de correspondance, peut intégrer des indications de localisation issues de différents réseaux d'accès, fixes et mobiles, de façon à ce que le terminal indépendamment des réseaux d'accès auquel il est connecté puisse bénéficier d'un serveur de contenus proche.

## Revendications

1. Procédé mis en œuvre par un serveur de sélection (110) comprenant :
- une réception d'un message de requête d'accès à un contenu en provenance d'un terminal utilisateur (10) comprenant une indication de localisation dudit terminal utilisateur, ladite indication de localisation étant un identifiant d'accès Wi-Fi dudit terminal utilisateur, ledit identifiant étant un paramètre Service Set Identifier, SSID,
- une sélection parmi un ensemble de serveurs de contenus du serveur de contenus (50-1) le plus proche du terminal utilisateur en fonction de l'indication de localisation, ladite sélection étant effectuée par le serveur de sélection au moyen d'une consultation d'une table de correspondance entre des indications de localisation de type SSID et des indications de localisation de type Tracking Area, TA, et en outre au moyen d'une correspondance entre les indications de localisation de type Tracking Area, TA, et des serveurs de contenus ,
- et un envoi d'un message comprenant une adresse dudit serveur de contenus sélectionné vers le terminal utilisateur (10).

2. Procédé selon la revendication 1, dans lequel la requête d'accès à un contenu est une requête de type HyperText Transfer Protocol, HTTP.

3. Procédé selon la revendication 1, dans lequel le serveur de sélection est un serveur Domain Name Server, DNS.

4. Procédé selon l'une quelconque des revendications 1 à 3, comportant en outre les étapes suivantes mises en œuvre par le terminal utilisateur, ledit terminal utilisateur étant connecté à un équipement (20) d'un réseau d'accès (60) de type Wi-Fi
- une réception d'au moins un message en provenance de l'équipement comprenant une information relative à la localisation dudit terminal utilisateur, l'information relative à la localisation étant un paramètre SSID,
- une génération de la requête d'accès à un contenu comprenant l'indication de localisation obtenue sur la base de l'information extraite du message,
- un envoi de ladite requête générée vers le serveur de sélection,
- une réception du message comprenant l'adresse du serveur de contenus sélectionné.

5. Serveur de sélection comprenant les modules suivants :
- un récepteur (1101), adapté pour recevoir un message de requête d'accès à un contenu en provenance d'un terminal utilisateur (10) comprenant une indication de localisation dudit terminal utilisateur, ladite indication de localisation étant un identifiant d'accès Wi-Fi dudit terminal utilisateur, ledit identifiant étant un paramètre Service Set Identifier, SSID,
- un module de sélection (1104), adapté pour sélectionner parmi un ensemble de serveurs, du serveur de contenus (50-1) le plus proche du terminal utilisateur en fonction de l'indication de localisation, ladite sélection étant effectuée par le serveur de sélection au moyen d'une consultation d'une table de correspondance entre des indications de localisation de type SSID et des indications de localisation de type Tracking Area, TA, et en outre au moyen d'une correspondance entre les indications de localisation de type Tracking Area, TA, et des serveurs de contenus
- un émetteur (1102), adapté pour émettre un message comprenant une adresse dudit serveur de contenus sélectionné vers le terminal utilisateur (10).

6. Serveur de sélection selon la revendication 5, dans lequel la requête d'accès à un contenu est une requête de type HyperText Transfer Protocol, HTTP.

7. Serveur de sélection selon la revendication 5, dans lequel le serveur de sélection est un serveur Domain Name Server, DNS.

8. Système d'accès à un contenu comprenant un serveur de sélection selon l'une quelconque des revendications 5 à 7 et un terminal utilisateur (10), ledit terminal utilisateur (10) étant connecté à un équipement (20) d'un réseau d'accès (60) de type Wi-Fi, le terminal comprenant les modules suivants
- un récepteur, adapté pour recevoir un message en provenance de l'équipement, comprenant une information relative à la localisation dudit terminal utilisateur (10), l'information relative à la localisation étant un paramètre SSID,
- un générateur, adapté pour générer la requête d'accès à un contenu comprenant l'indication de localisation obtenue sur la base de l'information extraite du message,
- un émetteur, adapté pour émettre ladite requête d'accès générée vers le serveur de sélection,
- un récepteur, adapté pour recevoir un message comprenant l'adresse du serveur de contenus sélectionné.

9. Programme d'ordinateur comprenant des instructions qui, lorsque le programme est exécuté par un serveur de sélection, conduisent celui-ci à mettre en œuvre les étapes du procédé selon l'une quelconque des revendications 1 à 3.

10. Programme d'ordinateur selon la revendication 9, comprenant en outre des instructions qui, lorsque le programme est exécuté par un système comprenant un serveur de sélection et un terminal utilisateur, conduisent celui-ci à mettre en œuvre les étapes du procédé selon la revendication 4.

11. Support d'enregistrement sur lequel sont stockées les instructions de code d'un programme d'ordinateur selon la revendication 9.

12. Support d'enregistrement sur lequel sont stockées les instructions de code d'un programme d'ordinateur selon la revendication 10.

## Patentansprüche

1. Verfahren, das von einem Auswahlserver (110) durchgeführt wird und Folgendes aufweist:
- Empfangen einer Nachricht mit einer Anfrage für den Zugriff auf einen Inhalt eines Benutzerendgeräts (10) mit einer Angabe zum Standort des Benutzerendgeräts, wobei die Standortangabe eine WiFi-Zugangskennung des Benutzerendgeräts ist, wobei die Kennung ein Service Set Identifier (SSID) ist,
- Auswählen des Inhaltsservers (50-1) aus einer Gruppe von Inhaltsservern, der dem Benutzerendgerät entsprechend der Standortangabe am nächsten liegt, wobei diese Auswahl vom Auswahlserver durch Abfrage einer Zuordnungstabelle zwischen Standortangaben vom Typ SSID und Standortangaben vom Typ Tracking Area TA und außerdem mittels einer Zuordnung zwischen den Standortangaben vom Typ Tracking Area, TA, und den Inhaltsservern durchgeführt wird,
- und Senden einer Nachricht, die eine Adresse des ausgewählten Inhaltsservers enthält, an das Benutzerendgerät (10).

2. Verfahren nach Anspruch 1, wobei die Anfrage für den Zugriff auf einen Inhalt eine Anfrage vom Typ HyperText Transfer Protocol (HTTP) ist.

3. Verfahren nach Anspruch 1, wobei der Auswahlserver ein Domain Name Server (DNS) ist.

4. Verfahren nach einem der Ansprüche 1 bis 3, das darüber hinaus die folgenden Schritte aufweist, die vom Benutzerendgerät ausgeführt werden, wobei das Benutzerendgerät mit einer Einrichtung (20) eines Zugangsnetzes (60) vom Typ WiFi verbunden ist:
- Empfangen mindestens einer Nachricht von der Einrichtung, die eine Information über den Standort des Benutzerendgeräts enthält, wobei die Information über den Standort ein SSID-Parameter ist,
- Erzeugen der Anfrage für den Zugriff auf einen Inhalt, die die auf der Grundlage der aus der Nachricht extrahierten Informationen erhaltenen Standortangabe enthält,
- Senden der erzeugten Anfrage an den Auswahlserver,
- Empfangen der Nachricht mit der Adresse des ausgewählten Inhaltsservers.

5. Auswahlserver, der die folgenden Module aufweist:
- einen Empfänger (1101), der dazu ausgelegt ist, eine Nachricht mit einer Anfrage für den Zugriff auf einen Inhalt eines Benutzerendgeräts (10) mit einer Angabe zum Standort des Benutzerendgeräts zu empfangen, wobei die Standortangabe eine WiFi-Zugangskennung des Benutzerendgeräts ist, wobei die Kennung ein Service Set Identifier (SSID) ist,
- ein Auswahlmodul (1104), das dazu ausgelegt ist, aus einer Gruppe von Servern den Inhaltsserver (50-1) auszuwählen, der dem Benutzerendgerät entsprechend der Standortangabe am nächsten liegt, wobei diese Auswahl vom Auswahlserver durch Abfrage einer Zuordnungstabelle zwischen Standortangaben vom Typ SSID und Standortangaben vom Typ Tracking Area TA und außerdem mittels einer Zuordnung zwischen den Standortangaben vom Typ Tracking Area, TA, und den Inhaltsservern durchgeführt wird,
- einen Sender (1102), der dazu ausgelegt ist, eine Nachricht, die eine Adresse des ausgewählten Inhaltsservers enthält, an das Benutzerendgerät (10) zu senden.

6. Auswahlserver nach Anspruch 5, wobei die Anfrage für den Zugriff auf einen Inhalt eine Anfrage vom Typ HyperText Transfer Protocol (HTTP) ist.

7. Auswahlserver nach Anspruch 5, wobei der Auswahlserver ein Domain Name Server (DNS) ist.

8. System zum Zugreifen auf einen Inhalt, das einen Auswahlserver nach einem der Ansprüche 5 bis 7 und ein Benutzerendgerät (10) aufweist, wobei das Benutzerendgerät (10) mit einer Einrichtung (20) eines Zugangsnetzes (60) vom Typ WiFi verbunden ist und das Endgerät die folgenden Module aufweist:
- einen Empfänger, der dazu ausgelegt ist, mindestens eine Nachricht von der Einrichtung zu empfangen, die eine Information über den Standort des Benutzerendgeräts (10) enthält, wobei die Information über den Standort ein SSID-Parameter ist,
- einen Generator, der dazu ausgelegt ist, die Anfrage für den Zugriff auf einen Inhalt zu erzeugen, die die auf der Grundlage der aus der Nachricht extrahierten Informationen erhaltenen Standortangabe enthält,
- einen Sender, der dazu ausgelegt ist, die erzeugte Anfrage für den Zugriff an den Auswahlserver zu senden,
- einen Empfänger, der dazu ausgelegt ist, eine Nachricht mit der Adresse des ausgewählten Inhaltsservers zu empfangen.

9. Computerprogramm, das Anweisungen aufweist, die, wenn das Programm von einem Auswahlserver ausgeführt wird, diesen dazu veranlassen, die Schritte des Verfahrens nach einem beliebigen der Ansprüche 1 bis 3 umzusetzen.

10. Computerprogramm nach Anspruch 9, das darüber hinaus Anweisungen aufweist, die, wenn das Programm von einem System ausgeführt wird, das einen Auswahlserver und ein Benutzerendgerät aufweist, dieses dazu veranlassen, die Schritte des Verfahrens gemäß Anspruch 4 durchzuführen.

11. Speichermedium, auf dem die Codeanweisungen eines Computerprogramms nach Anspruch 9 gespeichert sind.

12. Speichermedium, auf dem die Codeanweisungen eines Computerprogramms nach Anspruch 10 gespeichert sind.

## Claims

1. Method implemented by a selection server (110) comprising:
- receiving, from a user terminal (10), a content access request message containing a location indication indicating the location of said user terminal, said location indication being a Wi-Fi access identifier of said user terminal, said identifier being an SSID parameter, SSID being the abbreviation of Service Set IDentifier,
- selecting, from a set of content servers, the content server (50-1) closest to the user terminal according to the location indication, said selection being made by the selection server by means of consultation of a lookup table containing a correspondence between location indications of SSID type and location indications of TA type, TA being the abbreviation of Tracking Area, and by means in addition of a correspondence between the location indications of TA type and content servers,
- and sending a message containing an address of said selected content server to the user terminal (10).

2. Method according to Claim 1, wherein the content access request is an HTTP request, HTTP being the abbreviation of HyperText Transfer Protocol.

3. Method according to Claim 1, wherein the selection server is a DNS server, DNS being the abbreviation of Domain Name Server.

4. Method according to any one of Claims 1 to 3, further comprising the following steps implemented by the user terminal, said user terminal being connected to an equipment (20) of a Wi-Fi access network (60):
- receiving at least one message from the equipment, the at least one message containing location-related information relating to the location of said user terminal, the location-related information being an SSID parameter,
- generating the content access request, it containing the location indication obtained based on the information extracted from the message,
- sending said generated request to the selection server,
- receiving the message containing the address of the selected content server.

5. Selection server comprising the following modules:
- a receiver (1101) configured to receive, from a user terminal (10), a content access request message containing a location indication indicating the location of said user terminal, said location indication being a Wi-Fi access identifier of said user terminal, said identifier being an SSID parameter, SSID being the abbreviation of Service Set IDentifier,
- a selection module (1104), configured to select, from a set of servers, the content server (50-1) closest to the user terminal according to the location indication, said selection being made by the selection server by means of consultation of a lookup table containing a correspondence between location indications of SSID type and location indications of TA type, TA being the abbreviation of Tracking Area, and by means in addition of a correspondence between the location indications of TA type and content servers,
- a sender (1102), configured to send a message containing an address of said selected content server to the user terminal (10).

6. Selection server according to Claim 5, wherein the content access request is an HTTP request, HTTP being the abbreviation of HyperText Transfer Protocol.

7. Selection server according to Claim 5, wherein the selection server is a DNS server, DNS being the abbreviation of Domain Name Server.

8. Content access system comprising a selection server according to any one of Claims 5 to 7 and a user terminal (10), said user terminal (10) being connected to an equipment (20) of a Wi-Fi access network (60), the terminal comprising the following modules:
- a receiver, configured to receive a message from the equipment, the message containing location-related information relating to the location of said user terminal (10), the location-related information being an SSID parameter,
- a generator, configured to generate the content access request, it containing the location indication obtained based on the information extracted from the message,
- a sender, configured to send said generated access request to the selection server,
- a receiver, configured to receive a message containing the address of the selected content server.

9. Computer program comprising instructions that, when the program is executed by a selection server, cause the latter to implement the steps of the method according to any one of Claims 1 to 3.

10. Computer program according to Claim 9, further comprising instructions that, when the program is executed by a system comprising a selection server and a user terminal, cause it to implement the steps of the method according to Claim 4.

11. Recording medium on which the code instructions of a computer program according to Claim 9 are stored.

12. Recording medium on which the code instructions of a computer program according to Claim 10 are stored.
